# EUROPEAN PATENT APPLICATION

(11) **EP 4 438 681 A1**
(43) Date of publication of application: **02.10.2024**
(21) Application number: 23165573.9
(22) Date of filing: 30.03.2023
(51) Int. Cl.: C09B 62/533, C09D 11/00

(54) **NEW METAL FREE BISAZO GREY DYE COMPOUNDS**

(71) Applicant: Archroma IP GmbH, 4153 Reinach (CH)
(72) Inventor: Nusser, Rainer, Neuenburg am Rhein (DE); Sarode, Santosh, Samutprakan (TH); Schumacher, Christian, Arlesheim (CH); Catlow, Paul Geoffrey, Arlesheim (CH)
(74) Representative: Wallinger Ricker Schlotter Tostmann

(57) **Abstract**

Bisazo reactive compounds of formula (1) and salts thereof 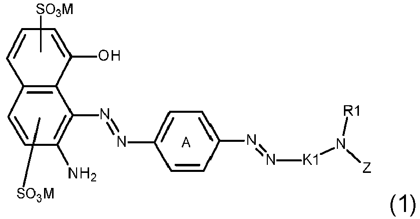 and mixtures thereof, a process for preparation and use of said compounds.

## Description

### FIELD OF THE INVENTION

The present invention relates reactive bisazo dye compounds and mixtures thereof, compositions comprising the compound or mixtures according to the invention, e.g in an ink, a printing ink, printing paste or dyeing bath for printing or dyeing a substrate comprising or a composition according to the invention, a process for preparing said reactive bisazo dyes, mixtures and compositions thereof; their use for dyeing and/or printing substrates, a process for dyeing or printing substrates with the dye mixture according to the invention or the composition according to the invention and substrates comprising the compounds or mixtures according to the invention or the composition according to the invention.

### BACKGROUND OF THE INVENTION

Reactive dyes (also referred to as "fiber-reactive azo dyes") are known in the art. Reactive dyes are a class of organic substances dyes that contain at least one substituent which reacts with the substrate and thus forms a covalent bond between the molecule of the dye and the substrate to be colored.

In this patent, especially reactive dyes comprising two azo groups are of interest and therefore, the term "bisazo reactive dyes" is used to refer to the dyes according to the invention.

For example, EP 1 954 765 and EP 2 061 844 relate to mixtures of reactive dyes that are suitable for dyeing or printing of amino- or hydroxy-group -containing fiber materials having good reproducibility and good all-round fastness properties.

Furthermore, WO 2015/193104 A1 relates to a dye mixture comprising a diazo dye component and at least one navy-blue dyeing dye, provides dyeing on wool with good all-round properties, and does not require alkaline after-treatments.

Mixtures of different dye compounds are most commonly used in industrial practice, e.g. light to medium ternary shades are matched with trichromatic combinations and mixtures. This leads to a number of disadvantages as for example the shades may deviate over time since the different components may perform different under aging effects, and due to variations under different application conditions.

KR100510242B1 provides a reactive grey dye possessing an azo component and a method for producing the same.

However, there is still a need for novel dyes, in particular fiber-reactive dyes, with good properties such as dye levelness (i.e. the uniformity of color shade along the substrate to be dyed), color fastness (light and wet/washing fastness, i.e. the resistance of the color to fading and running when exposed to light and/or wetness) and build-up behavior.

### OBJECT OF THE INVENTION

It is therefore an objective of the present invention to provide new reactive bisazo dyes having less disadvantages and improved properties, as for example higher fixation yields, superior build-up, and improved dyeing and fastness properties (e.g. light and wet/wash fastness).

### SUMMARY OF THE INVENTION

The present invention relates to new reactive bisazo dye compounds and mixtures thereof especially suitable for pale to medium dull ternary and grey shade coloration of cellulosic materials with good color fastness. In particular, the present invention relates to the following items:
Item 1: Compound of the general formula (1) or a salt thereof 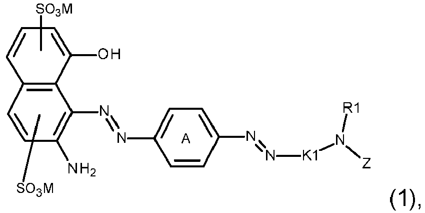
   and mixtures thereof,
   wherein
      - M: a counterbalancing cation;
      - A: carries from 1 to 4 substituents independently selected from the group comprising hydrogen, C₁ to C₆ saturated or unsaturated, branched or unbranched, cyclic or linear hydrocarbon, C₁ to C₆ saturated or unsaturated, branched or unbranched, cyclic or linear alkoxide, hydroxy, CO₂M, SO₃M , and mixtures thereof;
      - K1: signifies an aromatic entity which may bear from 1 to 4 substituents and wherein said substituents are selected from the group consisting of hydrogen, C₁ to C₆ saturated or unsaturated, branched or unbranched hydrocarbon, C₁ to C₆ saturated or unsaturated, branched or unbranched alkoxy, hydroxy, CO₂M, SO₃M, amino, C1 to C3 substituted amino, C₁ to C₃ acylamino (-NH-CO-(C₁ to C₃)), ureido (-NH-CO-NH₂), or mixtures thereof;
   and R1 and Z either signify the following;
      - R1: signifies hydrogen or C₁ to C₆ saturated or unsaturated, branched or unbranched cyclic or linear hydrocarbon;
      - Z: signifies a heterocyclic moiety selected from the group consisting of substituted triazinyl entities or substituted pyrimidinyl entities, being substituted by 1 to 3 substituents, wherein at least one of the substituents signifies an amine of the formula N(R2)(W-SO2Y) or a halogen or N(R2)(W-SO₂Y) and halogen;
   the residual substituents being selected from the group comprising hydrogen, C1 to C6 alkyl, amino, C1 to C3 substituted amino, C1 to C6 saturated or unsaturated, branched or unbranched, cyclic or linear alkyl amino, or cyan amine or mixtures thereof; wherein in N(R2)(W-SO₂-Y)
      - W: signifies 1,2-ethylene, 1,3-propylene 1,3-phenylene or 1,4-phenylene, or-CH₂CH₂OCH₂CH₂-;
      - R2: signifies hydrogen, substituted or unsubstituted C₁ to C₃ alkyl, substituted or unsubstituted phenyl, or signifies WSO₂Y;
      - Y: signifies vinyl, 2-sulfatoethyl, 2-acetylethyl or 2-chloroethyl;
   or W and R2 signify together a C₅ to C₈ heterocyclic entity, optionally including further heteroatoms selected from O, N and S, but then no SO₂Y-moiety is attached;.
Item 2: Compound according to item 1, wherein A signifies one of the following substituted phenyl entities (2a) to (2h) 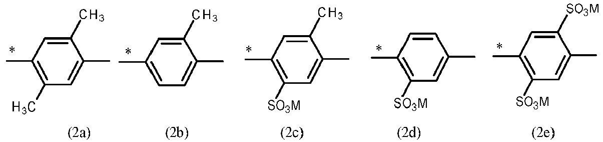 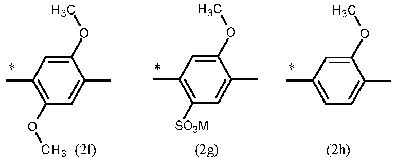
   wherein the bonding marked with * is connected to the diazo entity bridging to the disulfo amino naphtyl moiety;
   wherein M signifies a counterbalancing cation, preferably selected from the group consisting of Li⁺, Na⁺, K⁺, Mg⁺, Ca⁺, NH₄⁺ or (C₁₋₄ hydrocarbon)₁₋₄H₃₋₀N⁺, or a mixture thereof.
Item 3: Compound according to at least one of items 1 or 2, wherein K1 is a moiety of formula (3a) or (3b) 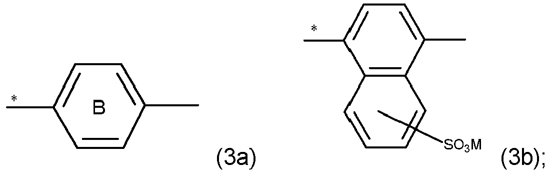 wherein the bonding marked with * is connected to the diazo entity bridging to the phenyl entity A; wherein
   - B: carries 1 to 4 substituents independently selected from the group consisting of hydrogen, C₁ to C₆ saturated or unsaturated, branched or unbranched hydrocarbon, C₁ to C₆ saturated or unsaturated, branched or unbranched alkoxy, CO₂M, SO₃M, hydroxy, amino, C1 to C3 substituted amino, C₁ to C₃ acylamino (-NH-CO-(C₁ to C₃)), ureido (-NH-CO-NH₂), or mixtures thereof;
   - M: signifies a counterbalancing cation.
Item 4: Compound according to item 3, wherein K1 signifies a structure according to formula (3a), wherein B carries 1 to 4 substituents selected from the group consisting of hydrogen, SO₃M, methoxy, acetylamino, methyl, ureido, or a mixture thereof; and M signifies a counterbalancing cation.
Item 5: Compound according to at least one of items 1 to 4, wherein R1 signifies hydrogen, methyl or ethyl, preferably hydrogen.
Item 6: Compound according to at least one of items 1 to 5, wherein Z signifies a moiety according to either one of formulas (5a) or (5b) 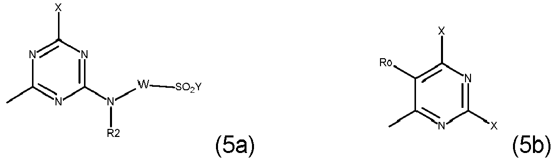 wherein
   - X: signifies a halogen or a cyano group, preferably fluoro or chloro;
   - Ro: signifies hydrogen, a halogen or a cyano group, preferably hydrogen or chloro;
   - R2: signifies hydrogen, substituted or unsubstituted C₁ to C₃ alkyl, or substituted or unsubstituted phenyl, or signifies WSO₂Y as defined in the previous claims; wherein the substituent of the substituted C₁ to C₃ alkyl or substituted phenyl is selected from SO₃M and/or CO₂M; preferably R2 signifies hydrogen, methyl, ethyl, or phenyl;
   - W: signifies 1,2-ethylene, 1,3-propylene, 1,3-phenylene or 1,4 phenylene, or-CH₂CH₂OCH₂CH₂-;
   - Y: signifies vinyl, 2-sulfatoethyl, 2-acetylethyl, or 2-chloroethyl;
   or R2 and W signify together a morpholino or piperazino entity; wherein no -SO₂Y moiety is attached.
Item 7: A process for preparing a compound as disclosed in at least one of items 1 to 6, wherein the process comprises an entity of formula (6a) 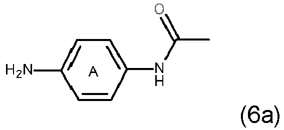 being diazotized and coupled onto one equivalent of a compound of formula (6b) 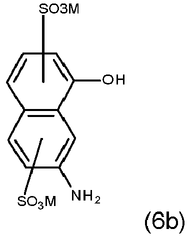 which results in an amine of formula (6c), which is then 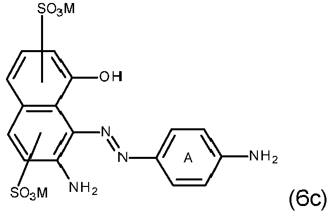 diazotized and coupled onto one equivalent of K1-NHR1 resulting in the compound of formula (6d) 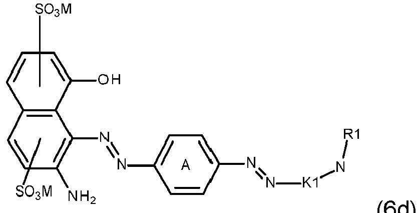 which is then coupled to the moiety Z resulting in the compound of formula (1) 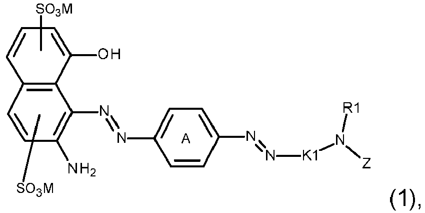 wherein M, A, K1, R1 and Z are each as defined as in at least one of items 1 to 6.
Item 8: Use of a compound as disclosed in at least one of the preceding items 1 to 6, or use of a compound prepared according to the process of item 7 in a dyeing process or a printing process, preferably a process for dyeing or printing a substrate, in particular a fibrous substrate, preferably of fibrous material comprising or consisting of at least cellulose or wool or polyamide or any fibre blends including these fibre materials, preferably selected from cotton, or viscose.
Item 9: Use according to item 8, wherein a compound as disclosed in at least one of the preceding items 1 to 6, or a compound prepared according to the process of item 7, is used as single grey dye or grey component in a multi-component dye or multi-component printing process.
Item 10: Process for dyeing or printing a substrate, wherein the process is a monochromatic dyeing or monochromatic printing process for the manufacturing of a color-containing substrate, wherein the single grey dye used in the monochromatic dyeing or monochromatic printing process is a compound as disclosed in at least one of the preceding item 1 to 6, or a compound prepared according to the process of item 7.
Item 11: Process for dyeing or printing a substrate, wherein the process is a multi-chromatic dyeing or multi-chromatic printing process for the manufacturing of a color-containing substrate, wherein the grey component is used together with other suitable dyes in a dye mixture in the multi-chromatic dyeing or multi-chromatic printing process is a compound as disclosed in at least one of the preceding items 1 to 6 , or a compound prepared according to the process of item 7.

An ink, a printing ink, a printing paste or a dyeing bath for printing or dyeing a substrate comprising the compound according to one of items 1 to 6 or manufactured according to item 7 or a composition comprising the compound according to at least one of items 1 to 6 or manufactured according to item 7.

Color-containing substrate prepared according to the process as disclosed in any one of items 10 or 11.

Color-containing substrate according to item 13, wherein the color-containing substrate is yarn, fabric, clothing, cloths, textiles, paper, cardboard or packaging material.

### DETAILED DESCRIPTION OF THE INVENTION

The present invention relates to a compound of the general formula (1) or a salt thereof 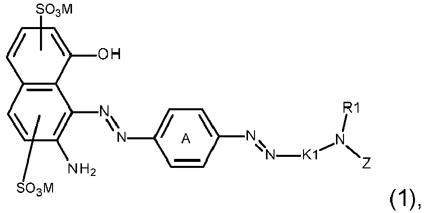
and mixtures thereof,
wherein
   - M: signifies a counterbalancing cation;
   - A: may carry from 1 to 4 substituents independently selected from the group comprising hydrogen, C₁ to C₆ saturated or unsaturated, branched or unbranched, cyclic or linear hydrocarbon, C₁ to C₆ saturated or unsaturated, branched or unbranched, cyclic or linear alkoxide, hydroxy, CO₂M, SO₃M, and mixtures thereof; wherein M signifies a counterbalancing cation;
   - K1: signifies an aromatic entity which may bear from 1 to 4 substituents and wherein said substituents are selected from the group consisting of hydrogen, C₁ to C₆ saturated or unsaturated, branched or unbranched hydrocarbon, C₁ to C₆ saturated or unsaturated, branched or unbranched alkoxy, hydroxy, CO₂M, SO₃M, amino, C1 to C3 substituted amino, C₁ to C₃ acylamino (-NH-CO-(C₁ to C₃)), ureido (-NH-CO-NH₂), or mixtures thereof;
and R1 and Z either signify the following;
   - R1: signifies hydrogen or C₁ to C₆ saturated or unsaturated, branched or unbranched cyclic or linear hydrocarbon;
   - Z: signifies a heterocyclic moiety selected from the group consisting of substituted triazinyl entities or substituted pyrimidinyl entities, being substituted by 1 to 3 substituents, wherein at least one of the substituents signifies an amine of the formula N(R2)(W-SO₂Y) or a halogen or N(R2)(W-SO₂Y) and halogen; the residual substituents being selected from the group comprising hydrogen, a C₁ to C₆ alkyl amino, C1 to C3 substituted amino, or C₁ to C₆ saturated or unsaturated, branched or unbranched, cyclic or linear alkyl amino, cyan amine or a mixture thereof; wherein in N(R2)(W-SO₂-Y)
   - W: signifies 1,2-ethylene, 1,3-propylene, 1,3-phenylene, 1,4-phenylene, or-CH₂CH₂OCH₂CH₂-;
   - R2: signifies hydrogen, substituted or unsubstituted C₁ to C₃ alkyl, substituted or unsubstituted phenyl, or WSO₂Y as defined herein.
   - Y: signifies vinyl, 2-sulfatoethyl, 2-acetylethyl or 2-chloroethyl;
or W and R2 signify together a C₅ to C₈ heterocyclic entity, optionally including further heteroatoms selected from O, N and S and then no SO₂Y-moiety is attached.

The term "counterbalancing cation" refers to any positively charged ion for counterbalancing negative charges of the compound according to the invention. Suitable positively charged ions are for example but not limited to H⁺, alkali metal cation, earth alkali metal ions, ammonia or alkyl ammonia ions or in general all cations that can be considered from an industrial point of view or a combination thereof. Commonly used examples for counterbalancing cations are for example but not limited to H⁺, Li⁺, Na⁺, K⁺, Mg⁺, Ca⁺, NH₄⁺, (C₁₋₄ hydrocarbon)₁₋₄H₃₋₀N⁺ or a combination thereof.

It is further possible that A signifies one of the following substituted phenyl entities (2a) to (2h) 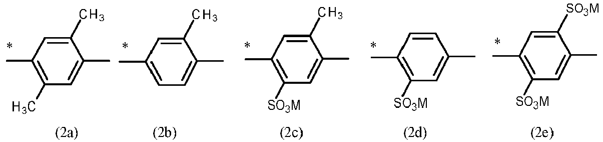 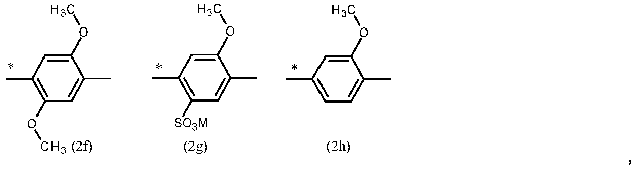 wherein the bonding marked with * is connected to the diazo entity bridging to the disulfo amino naphtyl moiety. M signifies a counterbalancing cation as defined above. Preferably the counterbalancing cation is selected from H⁺, Li⁺, Na⁺, K⁺, Mg⁺, Ca⁺, NH₄⁺, (C₁₋₄ hydrocarbon)₁₋₄H₃₋₀N⁺ or a combination thereof.

It is possible that moiety K1 of formula (1) according to the invention signifies a phenylene or a naphthalene entity which may bear from 1 to 4 substituents. Said substituents are selected from the group consisting of hydrogen, C₁ to C₆ saturated, branched or unbranched hydrocarbon, C₁ to C₆ saturated, branched or unbranched alkoxy, hydroxy, CO₂M, SO₃M, amino, C1 to C3 substituted amino, C₁ to C₃ acylamino (-NH-CO-(C₁ to C₃)), ureido (-NH-CO-NH₂), or mixtures thereof; wherein M signifies a counterbalancing cation.

It is further possible that moiety K1 of formula (1) according to the invention signifies a radical of either formula (3a) or (3b) 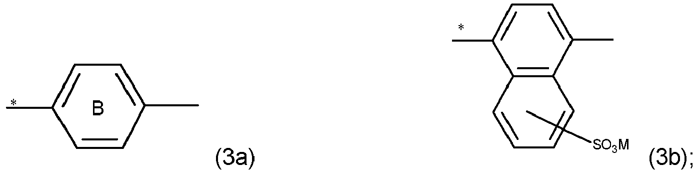 wherein the bonding marked with * is connected to the diazo entity bridging to the phenyl entity A; wherein
- B: may carry 1 to 4 substituents independently selected from the group consisting of hydrogen, C₁ to C₆ saturated or unsaturated, branched or unbranched hydrocarbon, C₁ to C₆ saturated or unsaturated, branched or unbranched alkoxy, hydroxy, CO₂M, SO₃M, amine, C₁ to C₃ acylamino (-NH-CO-(C₁ to C₃)), ureido (-NH-CO-NH₂), or mixtures thereof;
- M: signifies a counterbalancing cation as defined above.

It is possible that K1 signifies a moiety of formula (3a), wherein B carries 1 to 4 substituents which are selected from the group consisting of hydrogen, C₁ to C₆ saturated hydrocarbon or a C₁ to C₆ saturated alkoxide, hydroxy, SO₃M, C1 to C3 substituted amino, or mixtures thereof.

It is also possible that K1 signifies a moiety of formula (3a), wherein B carries 1 to 4 substituents selected from the group consisting of hydrogen, SO₃M, methoxy, acetylamino, methyl, ureido, or a mixture thereof; and M signifies a counterbalancing cation as defined above. Preferred substituents are selected from hydrogen, methyl, methoxy, SO₃M, ureido or a mixture thereof.

Although it is possible that none of the 1 to 4 substituents of B signify hydrogen, it is preferred that at least one substituent of B signifies hydrogen.

It is also possible that K1 signifies a radical of formula (3a), wherein the phenyl entity B is selected from one of the following formulas (4a) to (4i) 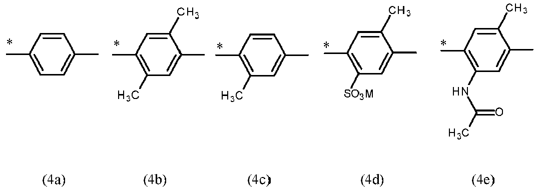 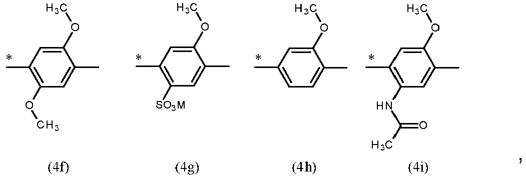 wherein the bonding marked with * is connected to the diazo entity bridging to the phenyl entity A.

It is further possible that K1 signifies a moiety of formula (3b) wherein M signifies a counterbalancing cation as defined above.

Further, it is still possible that R1 signifies hydrogen, methyl, or ethyl, preferred is hydrogen.

It is possible that the moiety Z is chosen from either one of formulas (5a) and (5b) 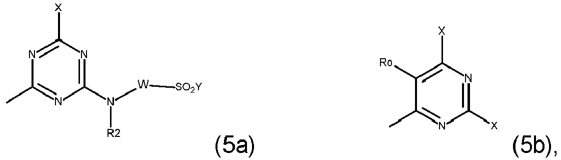 wherein
- X: signifies a halogen or a cyano group, preferably fluoro or chloro
- Ro: signifies hydrogen, a halogen or a cyano group, preferably hydrogen or chloro;
- W: signifies 1,2-ethylene, 1,3-propylene 1,3-phenylene or 1,4-phenylene, or-CH₂CH₂OCH₂CH₂-;
- R2: signifies hydrogen, substituted or unsubstituted C₁ to C₃ alkyl, or substituted or unsubstituted phenyl, or WSO₂Y as defined herein wherein the substituent of the substituted C₁ to C₃ alkyl or substituted phenyl is selected from SO₃M and/or CO₂M, wherein M signifies a counterbalancing cation as defined above;
- or R2 and W: signify together a morpholino or piperazino entity and then no SO₂Y moiety is attached;
- Y: signifies vinyl, 2-sulfatoethyl, 2-acetylethyl or 2-chloroethyl.
The remaining free bonding in formulas (5a) and (5b) respectively binds to the nitrogen atom bearing K1 and R1 as well.

It is also possible that the radical Z in formula (1) according to the invention signifies formula (5a), wherein
- X: signifies fluoro or chloro
- R2: signifies hydrogen, methyl, ethyl, or phenyl;
- W: signifies 1,2-ethylene, 1,3-propylene 1,3-phenylene, or 1,4 phenylene; and
- Y: signifies vinyl, 2-sulfatoethyl, 2-acetylethyl, or 2-chloroethyl.

It is possible that the moiety Z in compound of formula (1) according to the invention signifies formula (5a), wherein
- X: signifies halogen or a cyano group; preferably fluoro or chloro;
- W: signifies 1,2-ethylene, 1,3-propylene 1,3-phenylene or 1,4-phenylene, or-CH₂CH₂OCH₂CH₂-;
- R2: signifies hydrogen, methyl, ethyl or phenyl;
- Y: signifies vinyl or 2-sulfatoethyl or 2-chloroethyl.

It is further possible that the radical Z in formula (1) according to the invention signifies formula (5a), wherein
- X: signifies halogen or a cyano group; preferably fluoro or chloro;
- W and R2: signify together a morpholino or a piperazino entity without any SO₂Y moiety; and
- Y: signifies vinyl or 2-sulfatoethyl or 2-chloroethyl.

It is further possible that the radical Z in compound of formula (1) according to the invention signifies formula (5b), wherein
- X: signifies halogen or a cyano group; preferably fluoro or chloro;
- Ro: signifies hydrogen, a halogen or a cyano group; preferably hydrogen or chloro.

One advantage of the novel compounds of formula (1) according to the invention compared to the prior art are the SO₃M groups comprised in the dyeing, which lead to a better solvability, less staining on adjacent fiber material and better washing out behavior compared to the prior art.

One further decisive advantage of the the novel compounds of formula (1) according to the invention compared to the prior art is the by far better solubility of the compounds compared to the prior art.

The compounds of formula (1) according to the invention may be prepared by suitable diazotation and coupling reactions. Diazotization and coupling conditions can be chosen by analogy with customary diazotization and coupling reactions.

For diazotization, for example, the particular amine is cooled down to 0 - 15 °C, preferably to 0 - 5 °C, and diazotized by addition of hydrochloric acid and sodium nitrite. Thereafter, the diazotized amine is allowed to react with the corresponding coupling component, preferably in aqueous solution.

It is possible that the compounds of formula (1) according to the invention are prepared by a process, wherein said process comprises an entity of formula (6a) 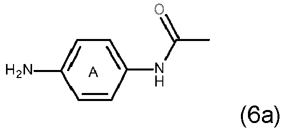 being diazotized and coupled onto one equivalent of a compound of formula (6b) 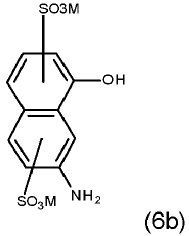 which results in an amine of formula (6c), which is then 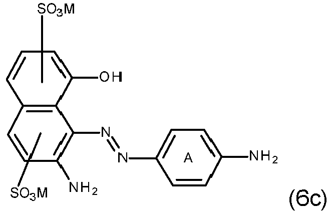 diazotized and coupled onto one equivalent of K1-NHR1 resulting in the compound of formula (6d) 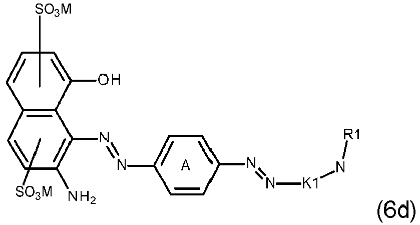 which is then condensed to the moiety Z resulting in the compounds of formula (1) according to the invention 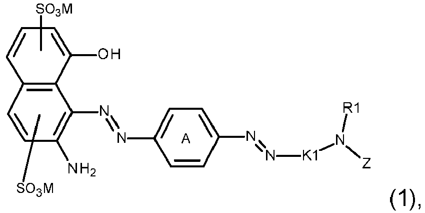 wherein M, A, K1, R1 and Z are each as defined before. Preferably Z is selected from any one of formula (5a) or (5b).

The compounds of formula (1) can be isolated from the reaction medium by conventional processes, for example but not limited to salting out with an alkali metal salt, filtering and drying, if appropriate under reduced pressure and at elevated temperature.

Depending on the reaction conditions, the compound of formula (1) may be obtained as free acid or as a salt or as a mixed salt which comprises one or more suitable counterbalancing cations as defined above. Further, the compounds can be converted by conventional techniques from the free acid into a salt or into a mixed salt, or vice versa, or from one salt form into another. If desired, the compounds can be further purified by diafiltration, in which case undesired salts and synthesis by-products are separated off from the crude anionic dye.

The removal of undesired salts and synthesis by-products and partial removal of water from the crude dye solution can be carried out by means of a semipermeable membrane by applying a pressure, whereby the dye is obtained without the undesired salts and synthesis by-products as a solution, and, if necessary, as a solid body in a conventional manner.

It is possible that the compound of formula (1) as synthesized by the process described can be a dye compound of formula (7)

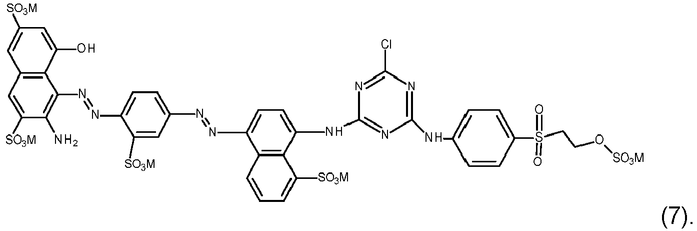

It is also possible that the compound of formula (1) as synthesized by the process described can be a dye compound of formula (8)

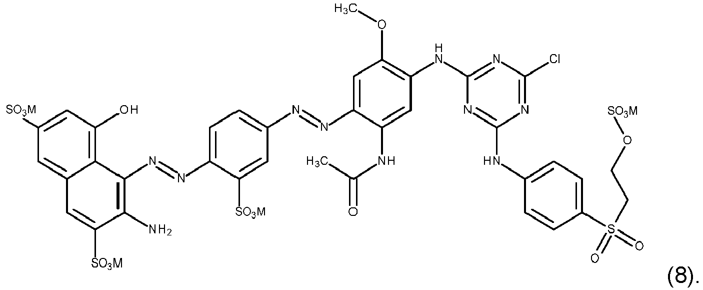

The compounds of formula (1) and their salts are particularly suitable for dyeing or printing fibrous material consisting of natural or synthetic polyamide; or cellulose fibre material, cotton or regenerated cellulose such as viscose and lyocell, or fibre blends including these fibre materials in grey shades. The compounds of formula (1) and their salts are suitable for producing ink-jet printing inks and for using these ink-jet printing inks to print fibrous material which consists of cellulose fibre material, cotton or regenerated cellulose such as viscose and lyocell, keratinous fibres, polyamide, or any fibre blends including these fibre materials with any other fibres known in the prior art as e.g. but not limited to polyester, polyamide, polyacrylic, viscose, linen etc; or cellulose in form of paper or paper board.

The term "fibrous material" refers to any substrate made from e.g. yarn, woven fabric, loop-forming knitted fabric, carpet etc. by any method known to the art. Fully fashioned dyeing are even perfectly possible on delicate substrates, examples being lamb-wool, cashmere, alpaca and mohair. Further, the compounds according to the invention are in particular useful for dyeing fine-dernier fibers (microfibers).

The invention accordingly relates in another aspect to the use of the compounds of formula (1) according to the invention, their salts and mixtures for dyeing and/or printing fibrous materials containing or consisting of natural or synthetic polyamides; or cellulose fibre material, cotton or regenerated cellulose such as viscose and lyocell, or fibre blends including these fibre materials; or cellulose in form of paper or paper board. A further aspect is the production of ink-jet printing inks and their use for printing fibrous materials containing or consisting of cellulose fibre material, cotton or regenerated cellulose such as viscose and lyocell, keratinous fibres, polyamide, or any fibre blends including these fibre materials with any other fibres known in the prior art as e.g. but not limited to polyester, polyamide, polyacrylic, viscose, linen etc; or cellulose in form of paper or paper board.

Dyeing is carried out as per known processes. Preference is given to dyeing in the exhaust process at a temperature of 15 to 140 °C, , and at a liquor ratio in the range from 3:1 to 40:1. The exhaust dyeing process conditions for cellulose fiber materials are at a temperature of 40 to 95 °C, more preferably 50 to 80 °C, and at a liquor ratio in the range from 3:1 to 40:1.

Dyeing can be carried out in a continuous or semi-continuous application process at temperatures in a range of from 15 to 100 °C. It is possible to use a cold pad batch method at temperatures in the range of from 15 to 35 °C, or from 20 to 30 °C. It is further possible to use fully continuous methods in the presence of steam at temperatures in the range of from 100 to 150 °C or from 100 to 130 °C.

Printing can be done to any method known in the prior art, e.g. the printing process may be an inkjet printing process, which is a non-impact printing technique in which droplets of ink are ejected through a fine nozzle onto a substrate without bringing the nozzle into contact with the substrate. Printing with a compound according to the invention is not limited to any type of substrate but suitable substrates include paper, plastic, textiles, metal, glass, or overhead projector slides.

The compounds according to the invention and their salts are highly compatible with dyes known in the art. Accordingly, the compounds of formula (1), their salts or mixtures can be used alone in a dyeing or printing process or else as a component in a combination shade dyeing or printing composition together with other dyes of the same class, i.e. with dyes possessing comparable dyeing properties, such as for example fastness properties and exhaustion rates from the dye bath onto the substrate. The compounds of the present invention can be used in particular together with certain other dyes having suitable chromophores. The ratio in which the dyes are present in a combination shade dyeing or printing composition is dictated by the hue to be obtained.

The novel compounds of formula (1), as stated above, are very useful for dyeing cellulose fibre material, cotton or regenerated cellulose such as viscose and lyocell, or fibre blends including these fibre materials, on each of which dyeings having a high fastness level, especially good light fastness and good wet fastness (washing, alkaline perspiration) are obtained. The compounds of formula (1) and their salts have a high rate of exhaustion. The ability of the compounds of formula (1) and their salt to build up is likewise very good. On-tone dyeings on the identified substrates are of outstanding quality. All dyeings moreover have a constant hue under artificial light.

One decisive advantage of the novel compounds of formula (1) according to the invention is that they are metal free and provide very homogeneous dyeings.

Another decisive advantage of the novel compounds of formula (1) according to the invention is that they may be applied as a single reactive dye for grey coloring instead of using a mixture of two or more different dyes.

It is possible that the compounds of formula (1) are used as a single dye.

However, although it is an advantage using the compounds of formula (1) according to the invention as a single dye, applying them in a multi-chromatic dyeing or a multi-chromatic printing process together with other suitable dyes in a multicomponent dye mixture (i.e. two or more dyes mixed together) is evenly possible and in case the compounds according to the invention are used as a combination element with other dyes of the same class having comparable dyeing properties, for example with regard to general fastness, exhaustion value, etc. the obtained combination dyeings have similar fastness compared to dyeings with the individual dye.

Multicomponent dyeing or printing can utilize all customary and known dyeing and printing processes, such as, for example, the continuous process, exhaustion process, foam dyeing process and ink-jet process.

The compositions for such multicomponent dyeings or printings may vary in a broad range depending on the desired hues and properties of the final product.

The compounds of formula (1) according to the invention can be used in all compositions commonly used in industrial applications as for example but not limited to inks, printing inks, printing pastes or a dyeing baths.

In such dyeing or printing compositions, the grey component may comprise only one dye according to the invention or more than one compounds according to the invention or compounds according to the invention as a mixture with other dyes e.g. of grey color.

It is possible that the compounds of formula (1) according to the invention are used as a grey component in trichromatic dyeings or printings.

All types of substrates commonly treated with dyes known in the art can be treated with the new type of dyes according to the invention as well. Examples therefore are but not limited to yarn,fabric, clothing, cloths, textiles, paper, cardboard, packaging, etc.

### EXAMPLES

In this section, different examples for production, application, and comparison of the bisazo reactive compounds are described.

### Preparation Example 1

A) 100 parts of 5-acetamido-2-amino-benzenesulfonic acid are suspended in 150 parts of a water/ice mixture. Subsequently, 81 parts of hydrochloric acid (35%) and 149 parts of sodium nitrite (20%) were added slowly. After stirring for 1 to 2 hours excessive nitrite was destroyed with sulfamic acid.
B) 127 parts of 3-amino-5-hydroxy-naphthalene-2,7-disulfonic acid were suspended in 506 parts of preheated water (40°C). The pH value of the mixture was adjusted to 6 to 7 by adding 20 parts of sodium hydroxide (50%). Said solution of 3-amino-5-hydroxynaphthalene-2,7-disulfonic acid was added to the diazonium salt obtained in step A) over 1 to 2 hours at 0 to 20°C. The temperature was controlled by adding 253 parts of ice. Afterwards, the pH-value of the reaction mixture was raised by the addition of 38 parts of sodium acetate. The resulting mixture was stirred overnight. After raising the temperature to 35 to 40°C, 430 parts of sodium chloride were added to precipitate the product. The wet cake obtained from filtering off the precipitated product was used without further purification in the next step.
C) The wet cake obtained in step B) and 266 parts of sodium hydroxide (30%) were added to 2278 parts of water. The reaction mixture was heated to a temperature of 40 to 50°C and stirred overnight at this temperature. The solution then clarified on diatom earth powder base, further clarified mass were precipitated by addition of 418 parts of sodium chloride. The precipitated mass was filtered and again a wet cake was obtained for direct use in the next step.
D) The wet cake obtained in step C) was suspended in 1013 parts of water. 57 parts of hydrochloric acid (35%) were added to the suspension. The reaction mixture was cooled to 10 to 15°C by addition of 506 parts of ice. Afterwards 88 parts of sodium nitrite (20%) were added over 1 hour. Stirring was continued for 1 to 2 hours and excessive nitrite was destroyed by the addition of an appropriate amount of sulfamic acid.
E) 57 parts of 8-aminonaphthalene-1-sulfonic acid were suspended in 190 parts of water. The pH-value of the suspension was raised in the range of 5 to 7 by addition of 3 parts of sodium hydroxide (20%). The diazonium salt obtained in step D) was added to the reaction mixture over 1 to 2 hours at 10 to 20 °C. The temperature was controlled by the addition of 250 parts of ice. Further, the pH-value was kept between 4 and 7 during the complete addition using 25 parts of sodium hydroxide (20%). Stirring of the reaction mixture was continued overnight and said mixture was used in the next step.
F) 49 parts of 2,4,6-trichloro-1,3,5-triazine were finely dispersed in 200 parts of water/ice mixture. 75 parts of 2-(4-aminophenyl)sulfonylethyl hydrogen sulphate were added slowly. The reaction mixture was stirred and maintained at 0 to 2°C for 30 min. The pH value of the reaction was increased to 2 to 3 by addition of ~ 40 parts of sodium carbonate (20%) and the temperature maintained at 0 to 5 °C for 3 to 5 hours. The reaction mixture was used without any purification in the next step of the procedure.
G) The mixture obtained from step F) was added to the reaction mixture obtained in step E) over 1 hour. Afterwards, the temperature of the resulting mixture was raised to 50 to 75°C and the pH value adjusted to 5 to 6.5 by adding ~ 56 parts of sodium carbonate (20%). After stirring for 4 to 5 hours, the product was dried under vacuum to obtain crude dye having the following formula in acid form. A reactive bisazo dye of the following formula (7) is obtained, wherein M is Na⁺.

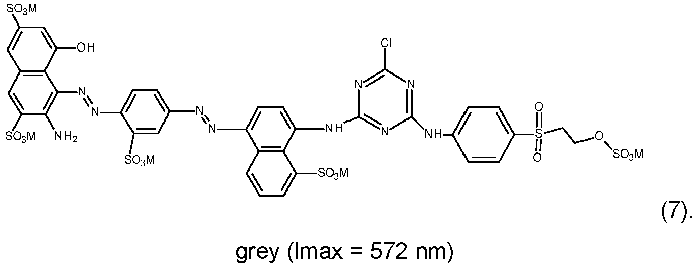

### Preparation Example 2

For the preparation of Example 2 according to the invention, steps A) to F) of Example 1 are repeated identically. Steps E) to G) are replaced by the following steps E2) to G2).

E2) 34.9 parts of N-(3-amino-4-methoxy-phenyl) acetamide were added to 330 parts of water. The monoazo diazonium salt obtained from step D) was added to 100 parts of product obtained from step C) over 1 to 2 hours at temperatures of below 40°C. Thereby, the pH value was kept in the range of from 4 to 7 by adding ~19 parts of sodium hydroxide (20%). After stirring overnight, the obtained mixture was used in the next steps.

F2) 37.5 parts of 2,4,6-trichloro-1,3,5-triazine were finely dispersed in 263 parts of a water/ice mixture. 57.3 parts of 2-(4-aminophenyl) sulfonylethyl hydrogen sulphate were added slowly thereto. The resulting reaction mixture was stirred at 0 to 2°C for 30 min. Afterwards, the pH value of the reaction was increased to 2 to 3 by adding ~ 29 parts of sodium carbonate (20%). After stirring at 0 to 5°C for 3 to 5 hours, the resulting reaction mixture was used without purification in the next step of the procedure.

G2) The mixture of step F2) was added to the obtained mixture of step E2) over about 1 hour. After increasing the temperature to 50 to 75°C and adjusting the pH value to 5 to 6.5 by adding ~ 42.8 parts of sodium carbonate (20%), the product containing solution was stirred for 4 to 5 hours. The product was dried under vacuum to obtain a crude dye having the following formula (8), wherein M signifies Na⁺.

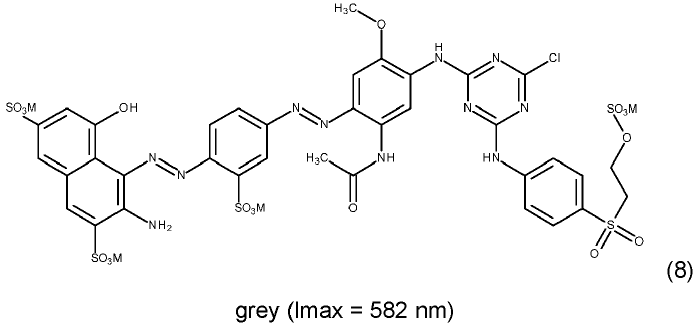

### Preparation Examples 3 to 31

The following table contains compounds of the general formula (1a) according to the invention prepared similarly to the method described in Preparation Examples 1 or 2 by using the corresponding starting materials.

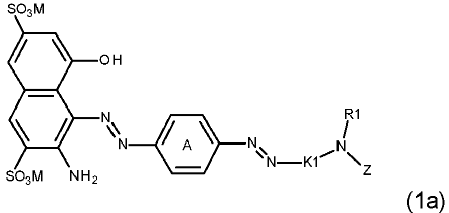

**Table 1:**

| **Example** | **Benzene ring A** | **K1** | **-N-R1-Z** | **λₘₐₓ (nm)** |
|---|---|---|---|---|
| 3 | 2-sulfo-1,4-phenylen | 6-sulfo-1,4-naphthylen | 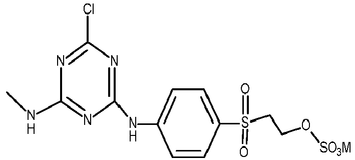 | 573 |
| 4 | 2-sulfo-1,4-phenylen | 7-sulfo-1,4-naphthylen | 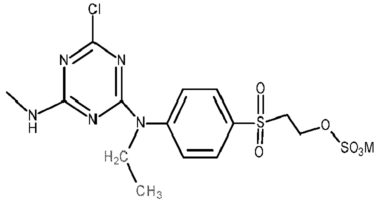 | 574 |
| 5 | 2-sulfo-1,4-phenylen | 8-sulfo-1,4-naphthylen | 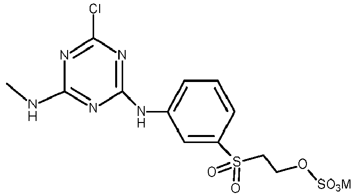 | 572 |
| 6 | 2-sulfo-1,4-phenylen | 1,4-phenylen | 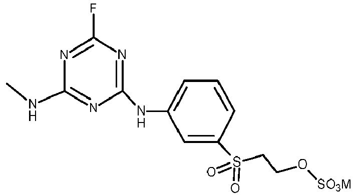 | 564 |
| 7 | 2-sulfo-1,4-phenylen | 2-methyl-1,4-phenylen | 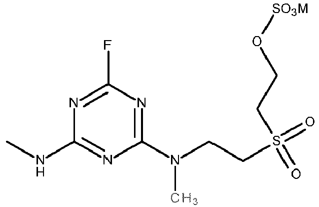 | 568 |
| 8 | 2-sulfo-1,4-phenylen | 2-acetylamino-5-methoxy-1,4-phenylen | 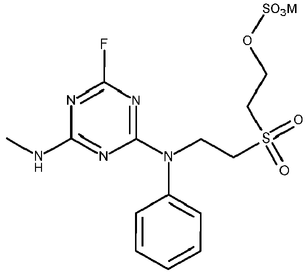 | 583 |
| 9 | 2-sulfo-1,4-phenylen | 2-methyl-1,4-phenylen | 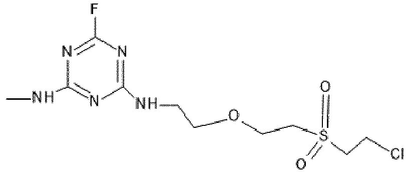 | 559 |
| 10 | 2-sulfo-1,4-phenylen | 2-methyl-1,4-phenylen | 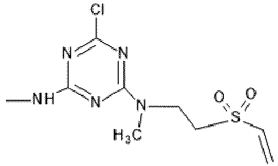 | 560 |
| 11 | 2-sulfo-1,4-phenylen | 1,4-phenylen | 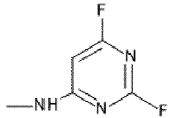 | 561 |
| 12 | 2-sulfo-1,4-phenylen | 2-acetylamino-5-methoxy-1,4-phenylen | 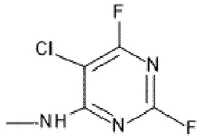 | 580 |
| 13 | 2-sulfo-1,4-phenylen | 1,4-phenylen | 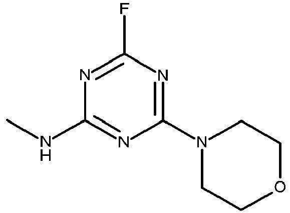 | 558 |
| 14 | 2-sulfo-1,4-phenylen | 2-methyl-1,4-phenylen | 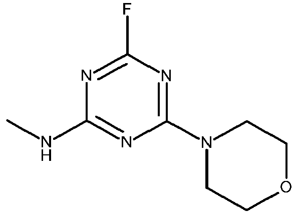 | 561 |
| 15 | 2-sulfo-1,4-phenylen | 6-sulfo-1,4-naphthylen | 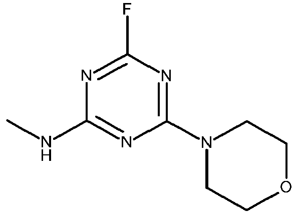 | 572 |
| 16 | 2-sulfo-1,4-phenylen | 7-sulfo-1,4-naphthylen | 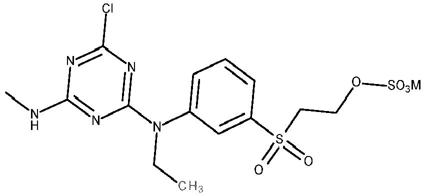 | 574 |
| 17 | 2-sulfo-1,4-phenylen | 1,4-phenylen | 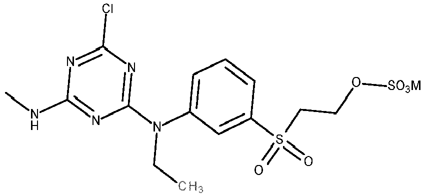 | 562 |
| 18 | 2-sulfo-1,4-phenylen | 2-methyl-1,4-phenylen | 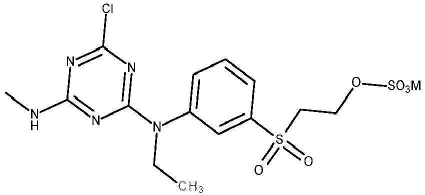 | 563 |
| 19 | 2-sulfo-1,4-phenylen | 2-acetylamino-5-methoxy-1,4-phenylen | 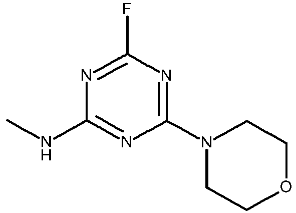 | 581 |
| 20 | 2-sulfo-1,4-phenylen | 2-acetylamino-5-methoxy-1,4-phenylen | 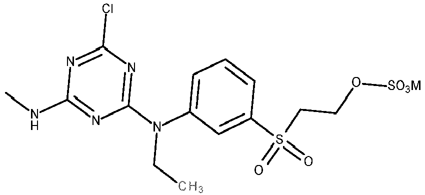 | 582 |
| 21 | 2-sulfo-1,4-phenylen | 1,4-phenylen | 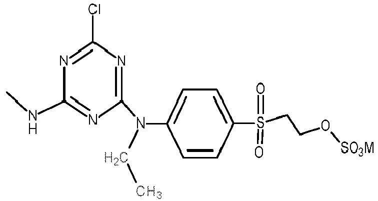 | 558 |
| 22 | 2-sulfo-1,4-phenylen | 2-methyl-1,4-phenylen | 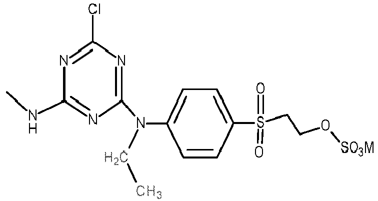 | 559 |
| 23 | 2-sulfo-1,4-phenylen | 2-acetylamino-5-methoxy-1,4-phenylen | 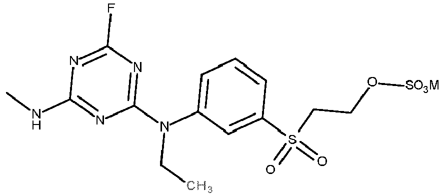 | 580 |
| 24 | 2-sulfo-1,4-phenylen | 1,4-phenylen | 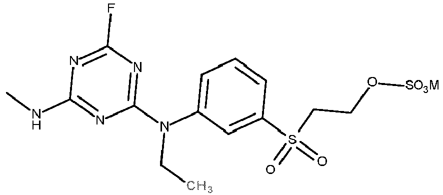 | 560 |
| 25 | 2-sulfo-1,4-phenylen | 2-methyl-1,4-phenylen | 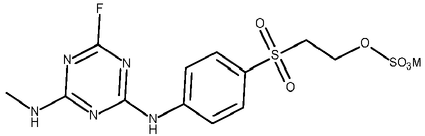 | 559 |
| 26 | 2-sulfo-1,4-phenylen | 1,4-phenylen | 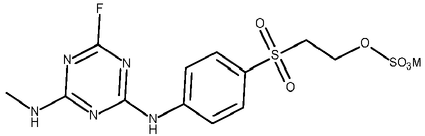 | 558 |
| 27 | 2-sulfo-1,4-phenylen | 8-sulfo-1,4-naphthylen | 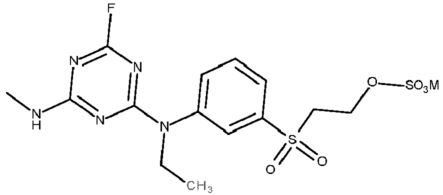 | 574 |
| 28 | 2-sulfo-1,4-phenylen | 8-sulfo-1,4-naphthylen | 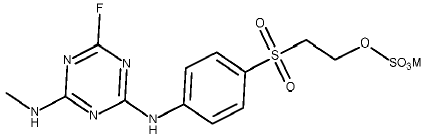 | 572 |
| 29 | 2-sulfo-1,4-phenylen | 2-acetylamino-5-methoxy-1,4-phenylen | 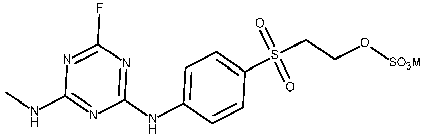 | 582 |
| 30 | 2-sulfo-1,4-phenylen | 2-acetylamino-5-methoxy-1,4-phenylen | 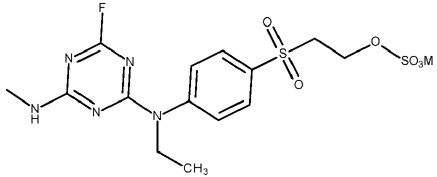 | 583 |
| 31 | 2-sulfo-1,4-phenylen | 2-acetylamino-1,4-phenylen | 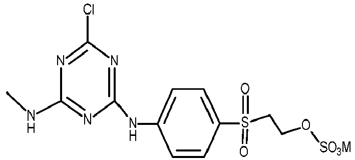 | 582 |

### Application Example A

0.3 parts of the dye of Example 1 are dissolved in 100 parts of demineralized water and 8 parts of Glauber's salt (calcined) are added. The dyebath is heated to 50 °C, then 10 parts of cotton fabric (bleached) are added. During the addition of sodium carbonate the temperature is kept at 50 °C. Subsequently, the dyebath is heated to 60 °C, and dyeing is effected for a further one hour at 60 °C.

The dyed fabric is then rinsed with cold water for 3 minutes and afterwards with hot water for further 3 minutes. The dyeing is washed at the boil for 15 minutes in 500 parts of demineralized water in the presence of 0.25 parts of Marseille soaps. After being rinsed with hot water (for 3 minutes) and centrifuged, the dyeing is dried in a cabinet dryer at about 70 °C. A black cotton dyeing is obtained showing good fastness properties and particularly good light and wet fastness properties, which are stable towards oxidative influences.

### Application Example B

To a dyebath containing in 100 parts of demineralized water 5 parts of Glauber's salt (calcined), 10 parts of cotton fabric (bleached) are added. The bath is heated to 50 °C within 10 minutes, and 0.5 parts of the dye of Example 1 are added. After a further 30 minutes at 50 °C, 1 part of sodium carbonate (calcined) is added. The dyebath is then heated to 60 °C and the dyeing process is continued at 60 °C for further 45 minutes.

The dyed fabric is rinsed with cold and then hot water and washed at the boil according to the method given in Application Example A. After rinsing and drying a black cotton dyeing is obtained which has the same good fastness properties as indicated in Application Example A.

Similarly, the dyes of Examples 2 to 31 or mixtures of the exemplified dyes may be employed to dye cotton in accordance with the method described in Application Example A or B. The cotton dyeing thus obtained are dark grey or grey and show good fastness properties, in particular light fastness.

### Application Example C

A printing paste consisting of

| | |
|---|---|
| 40 | parts of the dye of Example 1; |
| 100 | parts of urea; |
| 350 | parts of water; |
| 500 | parts of a 4% sodium alginate thickener; and |
| 10 | parts of sodium bicarbonate |
| 1000 | parts in total |

is applied to cotton fabric in accordance with conventional printing methods.

The printed fabric is dried and fixed in steam at 102 °C-104 °C for 4 to 8 minutes. It is rinsed in cold and then hot water, washed at the boil (according to the method described in Application Example A) and dried. A black print is obtained which has good general fastness properties.

Similarly, the dyes of Examples 2 to 31 or mixtures of the exemplified dyes may be employed to print cotton in accordance with the method given in Application Example C. All prints obtained are black or grey and show good fastness properties, in particular good light fastness properties.

### Application Example D

70 parts of chemically bleached sulphite cellulose of pinewood and 30 parts of chemically bleached sulphite cellulose of birchwood are ground in a Hollaender in 2000 parts of water. 0.2 parts of the dye of Example 1 are sprinkled into this pulp. After mixing for 20 minutes, paper is produced therefrom. The absorbent paper obtained in this way is dyed black. The wastewater is practically colorless.

### Application Example E

0.5 parts of the dye powder of Example 1 are dissolved in 100 parts of hot water and cooled to room temperature. The solution is added to 100 parts of chemically bleached sulphite cellulose, which has been ground in a Hollaender with 2000 parts of water. After thorough mixing for 15 minutes, sizing takes place in the usual way with rosin size and aluminum sulphate. Paper which is produced from this material has a black shade, and has good wastewater and wet fastness, as well as good light fastness.

### Application Example F

An absorbent length of unsized paper is drawn through a dye solution of the following composition at 40 to 50 °C:

| | |
|---|---|
| 0.5 | parts of the dye of Example 1; |
| 0.5 | parts of starch; and |
| 99.0 | parts of water. |

The excess dye solution is squeezed out through two rollers. The dried length of paper is dyed black.

Dyeing may also take place in a similar manner to that of Application Examples D to F using the dyes of Examples 2 to 31, or respectively a dye preparation thereof. The paper dyeings obtained are grey and possess a high level of fastness.

### Application Example G

50 parts of bleached pinewood sulphite cellulose and 50 parts of bleached beech cellulose (degree of beating 30 °SR (°SR = Schopper Riegler degree)) are mixed with 0.5 parts of the dye of Example 1 in water (pH 4, water hardness 10 °dH). After 16 minutes, sheet formation takes place. The paper is dyed in an intense grey shade. In contrast, a dyeing made at pH 7 shows no variation in depth or shade.

### Application Example H

1.1 parts of the dye of Example 1 are dissolved at 60 °C in 100 parts of demineralized water and subsequently diluted with 900 parts of cold, demineralized water. Then, 100 parts of cotton tricot (bleached) are added to the dye bath. After 5 minutes, 10 parts of calcined sodium sulphate and 2 parts of ammonium sulphate are added. Over 70 minutes, the temperature of the dye bath is continuously raised to 98 °C. This temperature is maintained for 20 minutes and the dye bath is then cooled to 70 °C over the course of 30 minutes. The dyed material is rinsed for 2 minutes with cold demineralized water and subsequently for 2 minutes with cold tap water, then centrifuged and dried. The cotton dyeing obtained has a dark grey shade.

### Application Example I

100 parts of cotton tricot, which have been dyed with the dye of Example 1 analogously to the method of Example H in ca. 1/1 standard depth, are mixed without intermediate drying in 1000 parts of tap water at 25 °C with 5 parts of sodium chloride and 4 parts of an after-treatment agent obtained from the reaction of diethylenetriamine with dicyandiamide. The pH value of the dye bath is set to 6.5 to 7. The bath is heated to 60 °C over the course of 20 minutes, and this temperature is maintained for a further 20 minutes. Afterwards, the material is rinsed with cold tap water. The dark grey cotton dyeing which has been after-treated in this way has perfect washing fastness and very good light fastness.

### Application Example J

A cotton dying produced with the dye of Example 1 analogously to the method of Example H in 1/1 standard depth, is impregnated on a padder with a solution, which contains 100 g/L of an after-treatment agent obtained by reacting the after-treatment agent of Example I with dimethylol-dihydroxy-ethylene urea and a hardening catalyst, and is squeezed out to a pick-up of ca. 80%. It is subsequently shock-dried for 45 seconds on a stenter at a temperature of 175 to 180 °C. The black cotton dyeing obtained is notable for its perfect washing fastness. At the same time, there is a considerable improvement in the creasing fastness, and reduced swelling value of the cellulosic fibers.

### Application Example K

2.5 parts of the dye obtained in Example 1 are dissolved while stirring at 25 °C in a mixture of 20 parts diethylene glycol and 77.5 parts water to obtain a printing ink suitable for ink jet printing.

### Comparison examples:

### Washing off behavior

The color fastness of the dyes according to the invention was compared to dyes already known in the prior art. Therefore, the following comparison dye 1 was used : 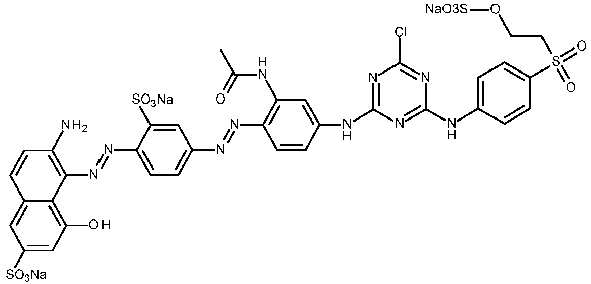 **Comparison Example 1.**
and compared with the dye according to the following formula 31:

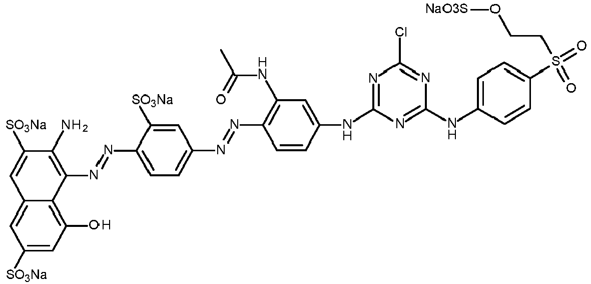

### Example 31.

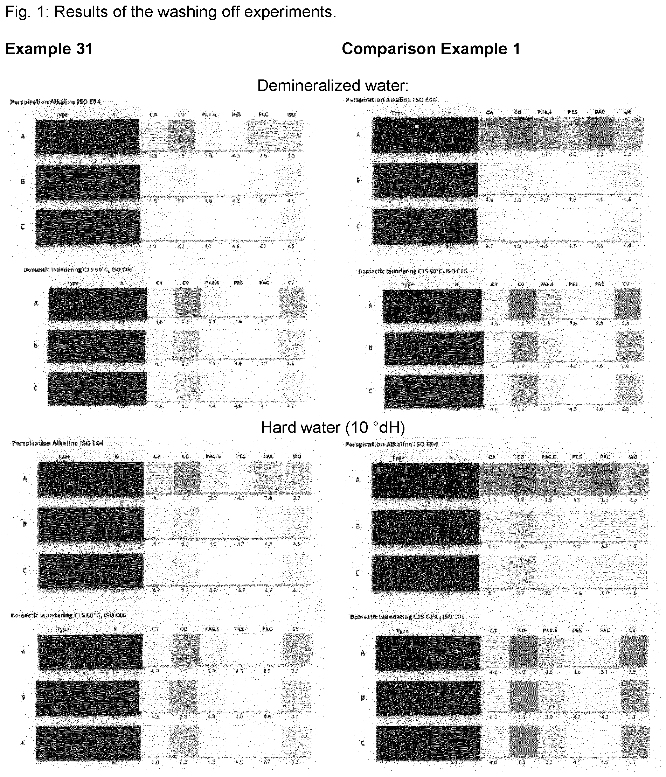

Two different washing off procedures were done, one according to ISO E04 (perspiration alkaline) and the other according to ISO C06 (domestic laundering C1S 60 °C). Both methods were done in two different aqueous environments, demineralized water and hard water (10 °dH). The results can be found in Fig. 1. The following table comprises the procedures applied in each experiment:

**Table 1: Conditions applied in the Washing off experiments.**

| | |
|---|---|
| A | 10 min at 50 °C |
| | 10 min at 50 °C with 6 mL/L acetic acid (10%) |
| B | 10 min at 50 °C |
| | 10 min at 50 °C with 6 mL/L acetic acid (10%) |
| | 15 min at 95 °C |
| C | 10 min at 50 °C |
| | 10 min at 50 °C with 6 mL/L acetic acid (10%) |
| | 15 min at 95 °C |
| | 10 min at 50 °C |

The results show a significantly increased color fastness of the compounds according to the invention compared with dyes known in the prior art.

## Claims

1. Compound of the general formula (1) or a salt thereof 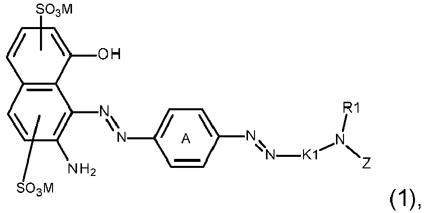
and mixtures thereof,
wherein
M a counterbalancing cation;
A carries from 1 to 4 substituents independently selected from the group comprising hydrogen, C₁ to C₆ saturated or unsaturated, branched or unbranched, cyclic or linear hydrocarbon, C₁ to C₆ saturated or unsaturated, branched or unbranched, cyclic or linear alkoxide, hydroxy, CO₂M, SO₃M , and mixtures thereof;
K1 signifies an aromatic entity which may bear from 1 to 4 substituents and wherein said substituents are selected from the group consisting of hydrogen, C₁ to C₆ saturated or unsaturated, branched or unbranched hydrocarbon, C₁ to C₆ saturated or unsaturated, branched or unbranched alkoxy, hydroxy, CO₂M, SO₃M, amino, C1 to C3 substituted amino, C₁ to C₃ acylamino (-NH-CO-(C₁ to C₃)), ureido (-NH-CO-NH₂), or mixtures thereof;
and R1 and Z either signify the following;
R1 signifies hydrogen or C₁ to C₆ saturated or unsaturated, branched or unbranched cyclic or linear hydrocarbon;
Z signifies a heterocyclic moiety selected from the group consisting of substituted triazinyl entities or substituted pyrimidinyl entities, being substituted by 1 to 3 substituents, wherein at least one of the substituents signifies an amine of the formula N(R2)(W-SO2Y) or a halogen or N(R2)(W-SO₂Y) and halogen;
the residual substituents being selected from the group comprising hydrogen, C1 to C6 alkyl, amino, C1 to C3 substituted amino, C1 to C6 saturated or unsaturated, branched or unbranched, cyclic or linear alkyl amino, or cyan amine or mixtures thereof; wherein in N(R2)(W-SO₂-Y)
W signifies 1,2-ethylene, 1,3-propylene 1,3-phenylene or 1,4-phenylene, or-CH₂CH₂OCH₂CH₂-;
R2 signifies hydrogen, substituted or unsubstituted C₁ to C₃ alkyl, substituted or unsubstituted phenyl, or signifies WSO₂Y;
Y signifies vinyl, 2-sulfatoethyl, 2-acetylethyl or 2-chloroethyl;
or W and R2 signify together a C₅ to C₈ heterocyclic entity, optionally including further heteroatoms selected from O, N and S, but then no SO₂Y-moiety is attached.

2. Compound according to claim 1, wherein A signifies one of the following substituted phenyl entities (2a) to (2h) 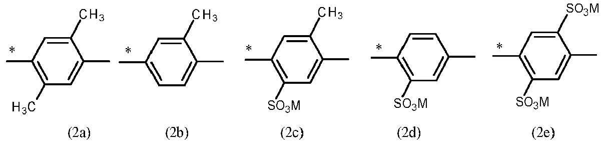 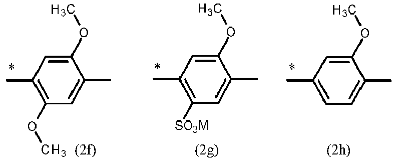
wherein the bonding marked with * is connected to the diazo entity bridging to the disulfo amino naphtyl moiety;
wherein M signifies a counterbalancing cation, preferably selected from the group consisting of Li⁺, Na⁺, K⁺, Mg⁺, Ca⁺, NH₄⁺ or (C₁₋₄ hydrocarbon)₁₋₄H₃₋₀N⁺, or a mixture thereof.

3. Compound according to at least one of claims 1 or 2, wherein K1 is a moiety of formula (3a) or (3b) 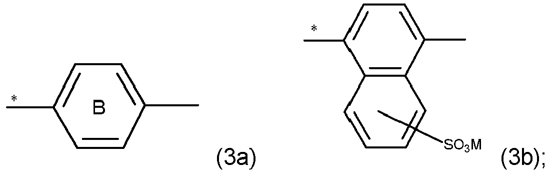
wherein the bonding marked with * is connected to the diazo entity bridging to the phenyl entity A;
wherein
B carries 1 to 4 substituents independently selected from the group consisting of hydrogen, C₁ to C₆ saturated or unsaturated, branched or unbranched hydrocarbon, C₁ to C₆ saturated or unsaturated, branched or unbranched alkoxy, CO₂M, SO₃M, hydroxy, amino, C1 to C3 substituted amino, C₁ to C₃ acylamino (-NH-CO-(C₁ to C₃)), ureido (-NH-CO-NH₂), or mixtures thereof;
M signifies a counterbalancing cation.

4. Compound according to claim 3, wherein K1 signifies a structure according to formula (3a), wherein B carries 1 to 4 substituents selected from the group consisting of hydrogen, SO₃M, methoxy, acetylamino, methyl, ureido, or a mixture thereof; and M signifies a counterbalancing cation.

5. Compound according to at least one of claims 1 to 4, wherein R1 signifies hydrogen, methyl or ethyl, preferably hydrogen.

6. Compound according to at least one of claims 1 to 5, wherein Z signifies a moiety according to either one of formulas (5a) or (5b) 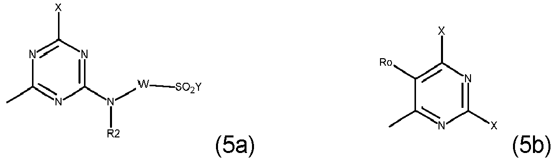 wherein
X signifies a halogen or a cyano group, preferably fluoro or chloro;
Ro signifies hydrogen, a halogen or a cyano group, preferably hydrogen or chloro;
R2 signifies hydrogen, substituted or unsubstituted C₁ to C₃ alkyl, or substituted or unsubstituted phenyl, or signifies WSO₂Y as defined in the previous claims; wherein the substituent of the substituted C₁ to C₃ alkyl or substituted phenyl is selected from SO₃M and/or CO₂M; preferably R2 signifies hydrogen, methyl, ethyl, or phenyl;
W signifies 1,2-ethylene, 1,3-propylene, 1,3-phenylene or 1,4 phenylene, or-CH₂CH₂OCH₂CH₂-;
Y signifies vinyl, 2-sulfatoethyl, 2-acetylethyl, or 2-chloroethyl;
or R2 and W signify together a morpholino or piperazino entity; wherein no -SO₂Y moiety is attached.

7. A process for preparing a compound as claimed in at least one of the preceding claims 1 to 6, wherein the process comprises an entity of formula (6a) 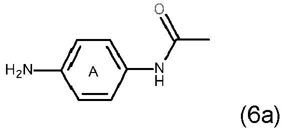 being diazotized and coupled onto one equivalent of a compound of formula (6b) 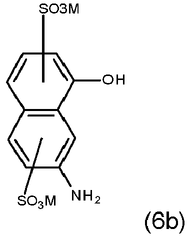 which results in an amine of formula (6c), which is then 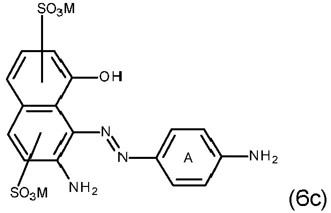 diazotized and coupled onto one equivalent of K1-NHR1 resulting in the compound of formula (6d) 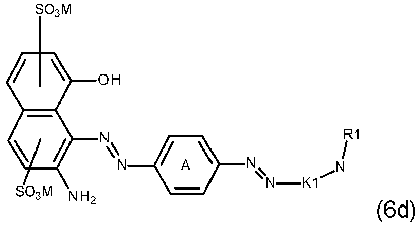 which is then coupled to the moiety Z resulting in the compound of formula (1) 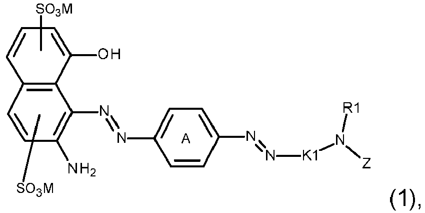 wherein M, A, K1, R1 and Z are each as defined as in at least one of the preceding claims 1 to 6.

8. Use of a compound as claimed in at least one of the preceding claims 1 to 6, or use of a compound prepared according to the process of claim 7 in a dyeing process or a printing process, preferably a process for dyeing or printing a substrate, in particular a fibrous substrate, preferably of fibrous material comprising or consisting of at least cellulose or wool or polyamide or any fibre blends including these fibre materials, preferably selected from cotton, or viscose.

9. Use as claimed in claim 8, wherein a compound as claimed in at least one of the preceding claims 1 to 6, or a compound prepared according to the process of claim 7, is used as single grey dye or grey component in a multi-component dye or multi-component printing process.

10. Process for dyeing or printing a substrate, wherein the process is a monochromatic dyeing or monochromatic printing process for the manufacturing of a color-containing substrate, wherein the single grey dye used in the monochromatic dyeing or monochromatic printing process is a compound as claimed in at least one of the preceding claims 1 to 6, or a compound prepared according to the process of claim 7.

11. Process for dyeing or printing a substrate, wherein the process is a multi-chromatic dyeing or multi-chromatic printing process for the manufacturing of a color-containing substrate, wherein the grey component is used together with other suitable dyes in a dye mixture in the multi-chromatic dyeing or multi-chromatic printing process is a compound as claimed in at least one of the preceding claims 1 to 6 , or a compound prepared according to the process of claim 7.

12. An ink, a printing ink, a printing paste or a dyeing bath for printing or dyeing a substrate comprising the compound according to one of claims 1 to 6 or manufactured according to claim 7 or a composition comprising the compound according to at least one of claims 1 to 6 or manufactured according to claim 7.

13. Color-containing substrate prepared according to the process as claimed in any one of claims 10 or 11.

14. Color-containing substrate according to claim 13, wherein the color-containing substrate is yarn, fabric, clothing, cloths, textiles, paper, cardboard or packaging material.
